# EUROPEAN PATENT APPLICATION

(11) **EP 1 939 712 A1**
(43) Date of publication of application: **02.07.2008**
(21) Application number: 07024213.6
(22) Date of filing: 13.12.2007
(51) Int. Cl.: G06F 3/01, G06F 3/048

(54) **Device and method for providing haptic user interface in mobile terminal**

(30) Priority: 21.12.2006 KR 20060131772
(71) Applicant: Samsung Electronics Co., Ltd., Suwon-si, Gyeonggi-do (KR)
(72) Inventor: Yoon, Sang Hyeon, Suwon-si Gyeonggi-do (KR); Lee, Ki Tae, Suwon-si Gyeonggi-do (KR)
(74) Representative: Harrison Goddard Foote

(57) **Abstract**

A device and method for providing a haptic user interface in a mobile terminal that can provide a haptic response to user manipulation are provided. The device for providing a haptic user interface in a mobile terminal includes a pointing device for receiving manipulation from a user to control a pointer; a display unit for displaying the pointer on a screen; a memory unit for storing information of a voltage level to be supplied to a vibration unit according to a coordinate value of the pointer; a controller for outputting a control signal based on the coordinate value of the pointer in the display unit according to movement of the pointing device and information of the memory unit; and a vibration unit for generating a vibration according to the control signal. Therefore, by generating a vibration according to movement of a pointer, a user can feel a response to manipulation of the user interface with the sense of touch as well as the sense of sight, thereby providing interest and convenience to the user.

## Description

### BACKGROUND OF THE INVENTION

### 1. Field of the Invention

The present invention relates generally to a user interface of a mobile terminal, and in particular, to a device and method for providing a haptic user interface in a mobile terminal that can provide a haptic response to user manipulation.

### 2. Description of the Related Art

In general, a mobile terminal includes a display unit and buttons as a user interface, and a user presses buttons to manipulate a function of the mobile terminal and checks the operation of the manipulated function through a display function (i.e., a display screen).
With a conventional user interface, the user can confirm if he/she has pressed the intended button by visually checking the mobile terminal display screen or by listening for a distinct sound (e.g., beeping sound) emanating from the mobile terminal as a button is pressed. However, in order to provide other types of sensory stimulation to the users as they manipulate the buttons of the mobile terminal, methods utilizing the sense of touch have been introduced.

Today, a haptic interface is currently being used that provides a response to the user using a vibration function, such that when the user presses a button, the interface notifies the user that the button is pressed by generating vibration.

However, a typical haptic interface is limited in that in a mobile terminal having a pointing device such as a mouse, the user can confirm the movement of the moving pointer only by viewing the moving pointer on the mobile terminal display unit.

### SUMMARY OF THE INVENTION

An aspect of the present invention is to substantially solve at least the above problems and/or disadvantages and to provide at least the advantages below. Accordingly, one aspect of the present invention is to provide a device and method for providing a haptic user interface in a mobile terminal that can provide a haptic response to user manipulation.

Another aspect of the present invention is to provide a device and method for providing a haptic user interface in a mobile terminal that can provide convenience to mobile terminal users during their manipulation of the mobile terminal's pointing device.

According to one aspect of the present invention, there is provided a device for providing a haptic user interface in a mobile terminal. The device includes a pointing device for receiving manipulation from a user to control a pointer; a display unit for displaying the pointer on a screen; a memory unit for storing information of a voltage level to be supplied to a vibration unit according to a coordinate value of the pointer; a controller for outputting a control signal based on the coordinate value of the pointer displayed in the display unit according to movement of the pointing device and information of the memory unit; and a vibration unit for generating a vibration according to the control signal.

According to another aspect of the present invention, there is provided a method of providing a haptic user interface in a mobile terminal. The method includes moving a pointer on a screen by user manipulation; generating a vibration of a first intensity according to the movement of the pointer; and generating, if the pointer is positioned at a specific area, a vibration of a second intensity different from the vibration of the first intensity.
According to yet another aspect of the present invention, there is provided a method of providing a haptic user interface in a mobile terminal. The method includes moving a pointer on a screen by user manipulation; and generating a vibration of an intensity that is set corresponding to an area at which the pointer is positioned.

According to still another aspect of the present invention, there is provided a method of providing a haptic user interface in a mobile terminal. The method includes moving an indicator; generating a vibration corresponding to a movement direction of the indicator; and generating a vibration corresponding to an area at which the indicator is positioned.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a configuration of a device for providing a haptic user interface in a mobile terminal according to the present invention;
FIGS. 2A to 2C are examples of a screen in which a pointer is positioned at a specific menu in the device of FIG. 1;
FIG. 3 is a diagram illustrating an example of a table of voltage levels to be provided to a vibration unit in the device of FIG. 1;
FIG. 4 is a flowchart illustrating a method of providing a haptic user interface in a mobile terminal according to the present invention;
FIG. 5 is a flowchart illustrating a method of providing a haptic user interface in a mobile terminal according to the present invention; and
FIG. 6 is a flowchart illustrating a method of providing a haptic user interface in a mobile terminal according to the present invention.

### DETAILED DESCRIPTION OF THE PREFERRED EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

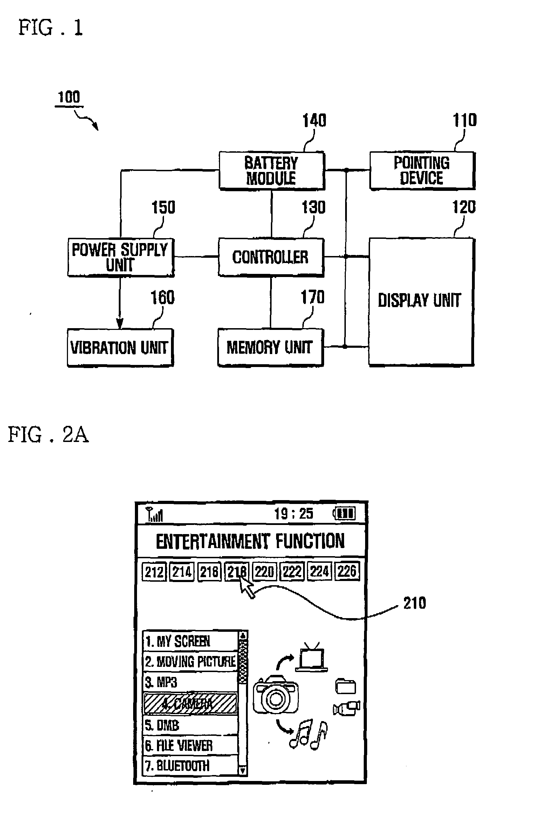

FIG. 1 is a block diagram illustrating a configuration of a device for providing a haptic user interface in a mobile terminal according to an exemplary embodiment of the present invention. FIGS. 2A to 2C are examples of a screen in which a pointer is positioned at a specific menu in the device of FIG. 1.

In FIG. 1, a device 100 for providing a haptic user interface includes a pointing device 110 for receiving manipulation for a user to control a pointer (for example, a mouse input device); a display unit 120 for displaying the pointer on a screen; a memory unit 170 for storing information of a voltage level to be supplied to a vibration unit 160 according to a coordinate value of the pointer; a controller 130 for outputting at least two control signals based on a coordinate value of the pointer displayed in the display unit 120 according to movement of the pointing device 110 and information of the memory unit 170; and a vibration unit 160 for generating vibration according to the control signal.

The device 100 for providing a haptic user interface further includes a battery module 140 for supplying power; and a power supply unit 150 for converting power of the battery module 140 to a level of a voltage corresponding to a control signal and outputting the converted voltage to the vibration unit 160.

The pointing device 110 may be an optical mouse, ball mouse, touch pad mouse, and a similar function module.

The controller 130 moves the pointer on the screen of the display unit 120 by a distance and in a direction that correspond to user manipulation of the pointing device 110. The coordinate value of the pointer may be pixel information of a position on the screen at which a tip of the pointer is positioned.

The memory unit 170 stores information of a voltage level to be supplied to the vibration unit 160 that is set according to a coordinate value range of the pointer. The controller 130 determines the coordinate value of the pointer and determines the voltage level to supply to the vibration unit 160 referring to the information. The information is updated through wired and wireless communication or is updated or changed by the user.

The controller 130 outputs, while the pointer moves, i.e. while the coordinate value of the pointer displayed in the display unit 120 changes, a control signal for controlling the power supply unit 150 to supply a voltage of a first level to the vibration unit 160. Upon receiving the control signal, the power supply unit 150 converts power of the battery module 140 to the voltage of the first level and supplies the voltage of the first level to the vibration unit 160. The vibration unit 160 then generates vibration by rotating a motor provided within the vibration unit 160 with the received voltage of the first level.

The voltage of the first level is the lowest voltage that can drive the vibration unit 160. When the pointer moves by manipulation of the pointing device 110 by the user, the weakest vibration that can be sensed by the user is generated.

That is, when the pointer moves by manipulating the pointing device 110, such as an optical mouse, by the user, minute vibration is generated that is just sufficient for movement of the pointer by manipulation of the pointing device 110 to be sensed by the user with the sense of touch, instead of by the sense of sight or the sense of hearing.

The controller 130 outputs, if the pointer is positioned at a coordinate of a specific position, a control signal for controlling the power supply unit 150 to supply a voltage of a second level different from the voltage of the first level to the vibration unit 160. The power supply unit 150 converts power of the battery module 140 to the voltage of the second level and supplies the voltage of the second level to the vibration unit 160. The vibration unit 160 then rotates a motor with the supplied voltage of the second level. A coordinate value range of the specific position and information of the voltage of the second level to be supplied according to the coordinate value range are stored in the memory unit 170.

The voltage of the second level is higher than the voltage of the first level, so that when the vibration unit 160 receives the voltage of the second level, the vibration unit 160 generates vibration stronger than that generated when receiving the voltage of the first level.

For example, as shown in FIG. 2A, if the pointer 210 is positioned at areas 212 to 226 of a specific menu item for performing a specific function, the vibration unit 160 generates vibration stronger than that generated when the pointer moves. Accordingly, the user can recognize that the pointer is positioned at a position for executing the specific function.

If a coordinate value at which the pointer is positioned corresponds to a coordinate value range of an item frequently used by the user, the controller 130 outputs a control signal for controlling the power supply unit 150 to supply a voltage of a third level to the vibration unit 160. The power supply unit 150 converts power of the battery module 140 to the voltage of the third level and supplies the voltage of the third level to the vibration unit 160. The vibration unit 160 then generates a vibration by rotating a motor with the received voltage of the third level. A coordinate value range of the item frequently used by the user and information of the voltage of the third level to be supplied according to the coordinate value range are stored in the memory unit 170.

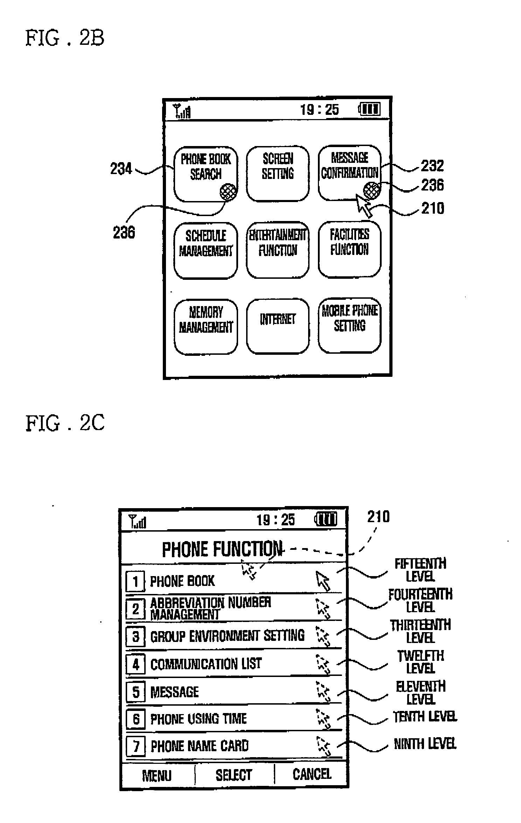

The voltage of the third level may be higher than the voltage of the second level. That is, the vibration unit 160 generates vibration stronger than that generated with the voltage of the second level by rotating a motor with the supplied voltage of the third level. For example, as shown in FIG. 2B, when the pointer 210 is positioned at an area that can execute a function item such as a 'message confirmation' item 232 or a 'phone number search' item 234 frequently used by the user, the vibration unit 160 generates vibration stronger than that generated when the pointer 210 is positioned at a function item for executing a function that is not so frequently used, so that the user can recognize that the pointer 210 is positioned at a position for executing a frequently used function item. As shown in FIG. 2B, in the function item frequently used by the user, an icon 236 can be displayed to distinguish the frequently used function item from other items. The controller 130 can further control the vibration unit 160 to generate vibration of a specific level for a frequently used item as well as for a function item, for example, when a frequently used phone number is highlighted within a communication list, the controller 130 can control the vibration unit 160 to generate a vibration of a specific level.

Further, the controller 130 controls the power supply unit 150 to supply a voltage of further levels to the vibration unit 160 to identify each menu item by further dividing a voltage level supplied from the power supply unit 150 to the vibration unit 160, thereby controlling to generate a vibration of different intensity.

For example, as shown in FIG. 2C, when the pointer 210 is positioned at a 'phone book' item, the controller 130 controls the power supply unit 150 to supply a voltage of the fifteenth level to the vibration unit 160; when the pointer 210 is positioned at an 'abbreviated number management' item, the controller 130 controls the power supply unit 150 to supply a voltage of the fourteenth level to the vibration unit 160; when the pointer 210 is positioned at a 'group environment setting' item, the controller 130 controls the power supply unit 150 to supply a voltage of the thirteenth level to the vibration unit 160; when the pointer 210 is positioned at a 'communication list' item, the controller 130 controls the power supply unit 150 to supply a voltage of the twelfth level to the vibration unit 160; and when the pointer 210 is positioned at a 'message' item, the controller 130 controls the power supply unit 150 to supply a voltage of the eleventh level to the vibration unit 160. That is, whenever the pointer 210 is positioned at a menu item, the controller 130 controls the power supply unit 150 to supply a voltage of a different level to those of other items to the vibration unit 160, thereby controlling to generate a vibration of a corresponding intensity, so that a haptic response is provided to the user according to movement and position of the pointer. As a result, a table of voltage levels can be stored in the memory unit 170.

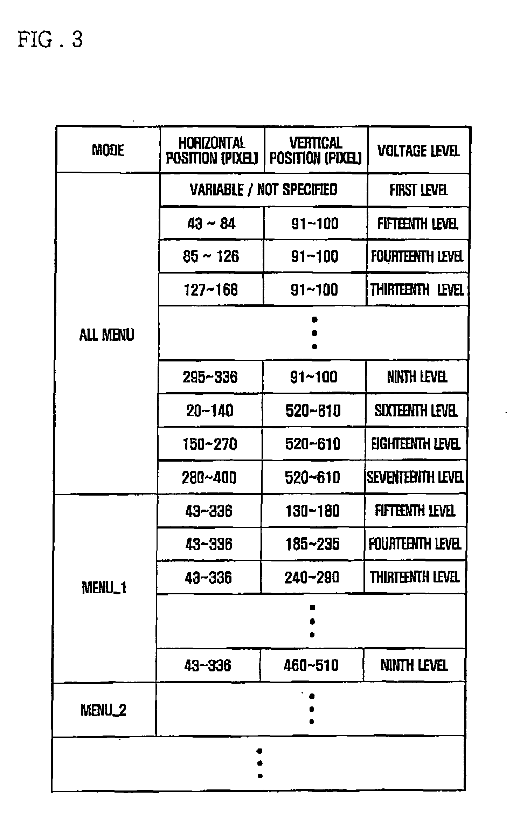

FIG. 3 is a diagram illustrating an example of a table of voltage levels to be provided to a vibration unit according to a coordinate value of the pointer.

The controller 130 controls the power supply unit 150 to supply to the vibration unit 160 a voltage of a level corresponding to a coordinate value of the pointer that is set according to data stored in the memory unit 170.

Further, the controller 130 can adjust a vibration level according to a menu level, for example, the controller 130 can control to generate a vibration of level 1 in an upper level menu, a vibration of level 2 in a lower level menu, and a vibration of level 3 in menus beneath the lower level menu. Accordingly, the user can recognize a menu level at which the pointer 210 is positioned without need for viewing.

The device 100 for providing a haptic user interface may include further vibration units in addition to the vibration unit 160 in order to transmit a more specific impression to the user.

The controller 130 can control to generate vibrations transmitting various impressions according to movement of the pointer 210 using at least two vibration units.

For example, when the pointer 210 moves from a lower part to an upper part on a screen, the controller 130 controls to sequentially generate vibration from a vibration unit 160 positioned at the lower part then from a vibration unit 160 positioned at the upper part using vibration units vertically disposed, thereby giving an impression that the pointer 210 moves upwards. When the pointer moves from the upper part to the lower part on the screen, the controller 130 controls to sequentially generate a vibration from the upper part then from the lower part, thereby giving an impression that the pointer 210 moves downwards.

Further, when the menu is converted to a menu disposed at the left or right of the menu or when the pointer 210 is moved in a horizontal or diagonal direction, the controller 130 controls one vibration unit to strongly vibrate and an adjacent vibration unit disposed in a direction corresponding to the movement direction to weakly vibrate, thereby giving an impression that the pointer 210 moves in a specific direction.

If a scroll or an indicator (for example, a highlight) positioned at a menu item in addition to the pointer 210 is moved, the same vibration effects can be used to indicate movement.

Even if only the vibration unit 160 is controlled, more specific impressions can be obtained. For example, when the controller 130 controls the vibration unit 160 to gradually increase or decrease a vibration level, a different impression can be obtained by user input or manipulation.

Further, although not shown, the device 100 for providing a haptic user interface in the mobile terminal may further include a storage medium insertion unit for storing data by inserting an external storage medium such as a memory card, and other units such as a camera module, broadcasting reception module, Radio Frequency (RF) transmission and reception module, audio signal output device such as a speaker, sound signal input device such as a microphone, connection terminal for exchanging data with an external digital appliance, charging terminal, and digital sound reproduction module such as an MP3 module. According to a function convergence trend of digital appliances, the mobile terminal can be modified, and other units may also be included in the device 100 for providing a haptic user interface.

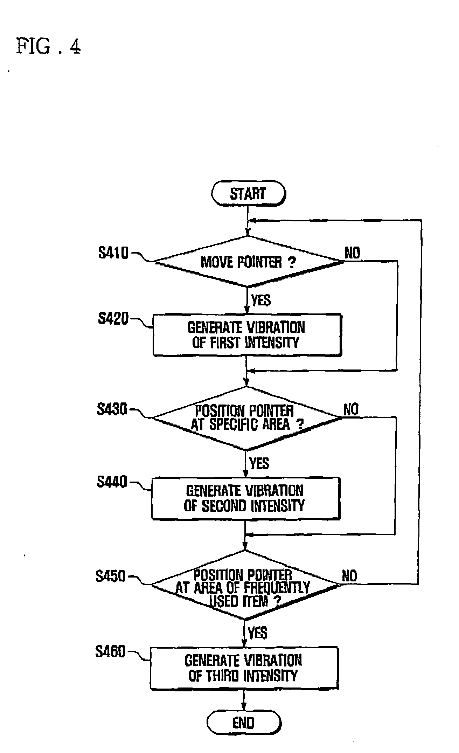

FIG. 4 is a flowchart illustrating a method of providing a haptic user interface in a mobile terminal according to the present invention.

In FIG. 4, the method of providing a haptic user interface includes moving the pointer 210 on a screen by user manipulation; generating a vibration of a first intensity according to the movement of the pointer 210; and generating, when the pointer 210 is positioned at a specific area, a vibration of an intensity different from the first intensity.

That is, if a pointing user interface is used, the controller 130 determines whether the pointer 210 moves on a screen in step S410. If the pointer 210 moves on a screen, the controller 130 controls to supply a voltage of a level for generating a vibration of the first intensity to the vibration unit 160 while the pointer 210 moves and controls the vibration unit 160 to generate a vibration in step S420.

The controller 130 determines whether the pointer 210 is positioned at a coordinate within a specific area on the screen in step S430.

If the pointer 210 is positioned at a coordinate within a specific area on the screen, the controller 130 controls to supply a voltage of a level corresponding to the specific area to the vibration unit 160 and to generate a vibration of a second intensity different from the first intensity in step S440. The specific area may be an area at which a specific menu item that can perform a specific function is positioned.

The method of providing a haptic user interface may further include, if the pointer 210 is positioned at an area of a frequently used menu item, generating a vibration of another intensity.

That is, the controller 130 determines whether the pointer 210 is positioned at a coordinate within an area of a frequently used menu item in step S450. If the pointer 210 is positioned at an area of a frequently used menu item, the controller 130 controls to generate a vibration of a third intensity different from the first intensity and the second intensity in step S460.

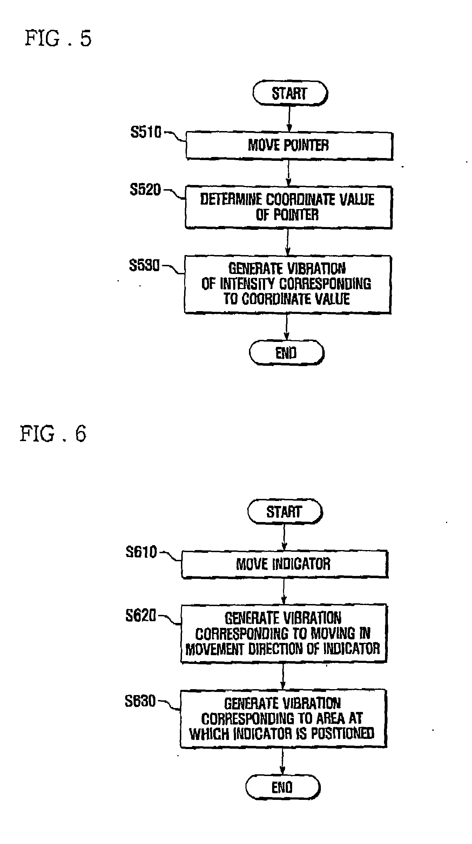

FIG. 5 is a flowchart illustrating a method of providing a haptic user interface in a mobile terminal according to the present invention.

In FIG. 5, the method of providing a haptic user interface includes moving the pointer 210 on a screen by user manipulation; and generating a vibration of an intensity that is set to correspond to an area at which the pointer 210 is positioned.

An area at which the pointer 210 is positioned may be an area of a menu item that can perform a specific function. That is, the controller 130 controls to move the pointer 210 on a screen according to user manipulation of the pointing device 110 in step S510, and the controller 130 determines a coordinate value of the pointer 210 in step S520.

The controller 130 controls to supply a voltage of a level corresponding to the determined coordinate value of the pointer 210 to the vibration unit 160 and to generate a vibration corresponding to the voltage level in step S530.

For example, the controller 130 controls to generate a different vibration for each of a confirmation button and a cancellation button one the screen, such that when the pointer 210 is positioned at the 'confirmation' button or the 'cancellation' button on the screen, the user can recognize the button or a function at which the pointer 210 is positioned according to an intensity of vibration. Furthermore, a coordinate value range can be divided according to a function execution area such as a menu item or a function button.

FIG. 6 is a flowchart illustrating a method of providing a haptic user interface in a mobile terminal according to the present invention.

In FIG. 6, the method of providing a haptic user interface includes moving an indicator; generating a vibration for giving an impression of moving of the indicator in a movement direction of the indicator; and generating a vibration for giving an impression corresponding to an area at which the indicator is positioned.

The controller 130 controls to move the indicator (for example, a pointer, highlight of a menu item, and scroll) according to manipulation by the user in step S610, and the controller 130 controls to generate a vibration for giving an impression of moving the indicator in a movement direction of the indicator in step S620.

For example, as described above, when the indicator moves from a lower part to an upper part on the screen, the controller 130 controls to sequentially generate a vibration from a vibration unit positioned at the lower part then from a vibration unit positioned at the upper part using vibration units vertically disposed, thereby giving an impression that the pointer moves upwards. When the indicator moves from the upper part to the lower part on the screen, the controller 130 controls to sequentially generate a vibration from the vibration unit positioned at the upper part then from a vibration unit positioned at the lower part using vibration units vertically disposed, thereby giving an impression that the pointer moves downwards.

Further, when the menu is converted to a menu disposed at the left or right of the screen and when the indicator is moved to a horizontal direction or a diagonal direction, the controller 130 controls one vibration unit to strongly vibrate and an adjacent vibration unit disposed in a direction corresponding to the movement direction to weakly vibrate, thereby giving an impression that the indicator moves in a specific direction.

The controller 130 controls to generate vibration of an impression corresponding to an area at which the indicator is positioned (S630). For example, the controller 130 controls to generate a vibration of level 1 at an upper menu, a vibration of level 2 at a lower menu, and a vibration of level 3 at menus beneath the level of the lower menu.

In order to determine a movement direction of the indicator and an area at which the indicator is positioned, the controller 130 determines a coordinate value of the indicator and necessary information such as data read from the memory unit 170.

Further, although not shown, as described above, when converting the menu, the controller 130 can adjust a vibration level according to a level of the menu, for example, the controller 130 controls to generate a vibration of level 1 at an upper level menu, a vibration of level 2 at a lower level menu, and a vibration of level 3 at menus beneath the lower level menu.

As described above, in a device and method of providing a haptic user interface in a mobile terminal according to the present invention, by generating a vibration according to movement of a pointer, a user can feel a response to manipulation of the user interface with the sense of touch as well as the sense of sight, thereby providing interest and convenience to the user.

Further, according to movement and position of the pointer and an area at which the pointer is positioned, by generating a vibration of different intensity and different impressions, a different haptic response is provided to the user according to a menu or function, or user manipulation, thereby providing convenience to the user.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A device for providing a haptic user interface in a mobile terminal, the device comprising:
a pointing device for receiving manipulation from a user to control a pointer;
a display unit for displaying the pointer on a screen;
a memory unit for storing information of a voltage level to be supplied to a vibration unit according to a coordinate value of the pointer;
a controller for outputting a control signal based on the coordinate value of the pointer displayed in the display unit according to movement of the pointing device and information of the memory unit; and
a vibration unit for generating a vibration according to the control signal.

2. The device of claim 1, wherein the coordinate value of the pointer is pixel information of a position on the screen at which a tip of the pointer is positioned.

3. The device of claim 1, further comprising:
a battery module for supplying power; and
a power supply unit for converting power of the battery module to a voltage level corresponding to the control signal and outputting the voltage to the vibration unit.

4. The device of claim 3, wherein the controller outputs, if the pointer is moving, a control signal for controlling the power supply unit to supply a voltage of a first level to the vibration unit.

5. The device of claim 4, wherein the vibration unit generates a vibration by rotating a motor with the supplied voltage of the first level.

6. The device of claim 5, wherein the voltage of the first level is the lowest voltage to drive the vibration unit.

7. The device of claim 4, wherein the controller outputs, if the pointer is positioned at a coordinate of a specific position, a control signal for controlling the power supply unit to supply to the vibration unit a voltage of a second level different from the voltage of the first level.

8. The device of claim 7, wherein the vibration unit generates a vibration by rotating a motor with the supplied voltage of the second level.

9. The device of claim 8, wherein the voltage of the second level is higher than the voltage of the first level.

10. The device of claim 7, wherein the controller outputs, if the coordinate value of the pointer is within a coordinate range of an item frequently used by the user, a control signal for controlling the power supply unit to supply a voltage of a third level to the vibration unit.

11. The device of claim 10, wherein the vibration unit generates a vibration by rotating a motor with the supplied voltage of the third level.

12. The device of claim 11, wherein the voltage of the third level is higher than the voltage of the second level.

13. The device of claim 1, wherein the controller controls to supply to the vibration unit a voltage of a level corresponding to the coordinate value of the pointer that is set according to data stored in the memory unit.

14. The device of claim 1, wherein the controller adjusts the vibration according to a menu level.

15. The device of claim 1, further comprising at least one further vibration unit.

16. The device of claim 15, wherein the controller controls the at least two vibration units to generate a vibration having different vibration characteristics according to movement of the pointer.

17. The device of claim 16, wherein the controller controls at least two vibration units to generate vibration according to a movement direction of the pointer.

18. The device of claim 1, wherein the controller controls the vibration unit to gradually adjust the vibration generated by the vibration unit.

19. A method of providing a haptic user interface in a mobile terminal, the method comprising:
moving a pointer on a screen by user manipulation;
generating a vibration of a first intensity according to the movement of the pointer; and
generating, if the pointer is positioned at a specific area, a vibration of a second intensity different from the vibration of the first intensity.

20. The method of claim 19, wherein the specific area is an area of a specific menu item for performing a specific function.

21. The method of claim 19, further comprising generating, if the pointer is positioned at an area of a frequently used menu item, a vibration of a third intensity.

22. A method of providing a haptic user interface in a mobile terminal, comprising:
moving a pointer on a screen by user manipulation; and
generating vibration of an intensity that is set corresponding to an area at which the pointer is positioned.

23. A method of providing a haptic user interface in a mobile terminal, the method comprising:
moving an indicator;
generating a vibration corresponding to a movement direction of the indicator; and
generating a vibration corresponding to an area at which the indicator is positioned.

24. The method of claim 23, further comprising generating, when a menu is changed, a vibration corresponding to a level of the menu.
